# DEMANDE DE BREVET EUROPEEN

(11) **EP 2 267 857 A1**
(43) Date de publication de la demande: **29.12.2010**
(21) Numéro de dépôt: 10166538.8
(22) Date de dépôt: 18.06.2010
(51) Int. Cl.: H02H 3/033, H02H 5/04, H02H 7/22

(54) **Circuit de protection électrique**

(30) Priorité: 22.06.2009 FR 0954212
(71) Demandeur: Peugeot Citroën Automobiles SA, 78140 Vélizy-Villacoublay (FR)
(72) Inventeur: Sullet, Xavier, 91120, Palaiseau (FR)

(57) **Abrégé**

La présente invention a pour objet circuit électrique (1, 20, 30, 40) comprenant un interrupteur (2) laissant passer le courant en position fermée et empêchant le courant de passer en position ouverte; ledit circuit électrique comprenant en outre un interrupteur (2) comportant un contact fixe (6) et un contact mobile (7), laissant passer le courant en position fermée et empêchant le courant de passer en position ouverte; ledit circuit électrique comprenant également un contrôleur (9) apte, en cas de réception un signal d'alerte, à effectuer une opération de protection d'un élément dudit circuit électrique (1, 20, 30, 40) autre que ledit interrupteur (2), avant que la température dudit interrupteur (2) ne continue augmenter jusqu'à dégrader ledit interrupteur (2) au point d'empêcher le courant de passer, où ledit interrupteur (2) est séparé dudit détecteur (8) au moyen d'une paroi (5) autorisant un transfert thermique entre ledit interrupteur (2) et ladite paroi (5) puis entre ladite paroi (5) et ledit détecteur (8) de sorte que ledit détecteur (8) détecte une élévation de la température lorsque la température de ladite paroi (5) dépasse une valeur seuil. On notera que le domaine d'application de l'invention est celui des véhicules automobiles.

## Description

La présente invention concerne un circuit électrique permettant la commutation de liaisons électriques de façon à dissocier la partie commande de la partie puissance d'un équipement électrique.

Un relais bistable est un composant connu permettant ce type de commutation. Il s'agit d'un interrupteur de courant comportant généralement deux bobines montées en opposition. La mise sous tension d'une bobine déplace l'armature mobile et ses contacts qui restent en position par un système magnétique ou mécanique quand la bobine n'est plus alimentée. Pour changer la position il faut alimenter brièvement l'autre bobine. Ce type de relais est généralement associé à au moins un fusible situé entre une alimentation et le relais. Un tel fusible autorise le passage du courant jusqu'à une certaine valeur seuil dépendant du type de fusible. Au-delà de cette valeur seuil il fond, empêchant de facto le courant électrique de continuer sur sa lancée.

De façon connue, un fusible est souvent associé à un relais bistable ou plus généralement un interrupteur pour protéger le relais en coupant l'alimentation dès l'apparition d'une surchauffe. Parallèlement, l'équipement alimenté par le relais est donc mis hors tension.

Ce type de montage, c'est-à-dire relais et fusible associé, présente toutefois l'inconvénient de couper l'alimentation de l'équipement alimenté par le relais dès lors qu'une surchauffe qui aurait pour effet de détériorer l'intégrité du relais et/ou de l'équipement se présente. Certes, un tel fusible est sécuritaire pour le relais et l'équipement alimenté mais il ne permet pas d'assurer en priorité l'alimentation de l'équipement alors qu'il est parfois préférable que celle-ci soit conservée et ce même au détriment de l'intégrité du relais et/ou de l'équipement.

En outre, selon les dispositifs connus de l'état de la technique, lorsqu'un pic d'intensité se produit, le fusible fond et coupe l'alimentation du relais électrique. Ce type de coupure est intempestif et non avantageux dans la situation où il est préférable que l'alimentation soit maintenue.

Il existe également des relais bistables à dissipateur thermique intégré ; ce type de système permet de détecter une surchauffe mais a pour action de suspendre le maintien du relais jusqu'à ce que la surchauffe disparaisse. A nouveau, un tel système ne permet pas d'assurer en priorité l'alimentation de l'équipement lorsqu'il est préférable que celle-ci soit conservée.

Dans ce contexte, l'invention vise à proposer un circuit électrique permettant de s'affranchir des problèmes précités de façon à ne pas couper de manière intempestive l'alimentation de l'équipement ou en suspendant le maintien du relais en position fermé.

A cette fin, l'objet de l'invention porte sur un circuit électrique comprenant :
- un interrupteur laissant passer le courant en position fermée et empêchant le courant de passer en position ouverte ;
- un détecteur d'une élévation de température au voisinage dudit interrupteur, représentative d'un début de dégradation dudit interrupteur en position fermée, apte à envoyer un signal d'alerte représentatif dudit début de dégradation ;
- un contrôleur apte, en cas de réception dudit signal d'alerte, à effectuer une opération de protection d'un élément dudit circuit électrique autre que ledit interrupteur, avant que la température dudit interrupteur ne continue à augmenter jusqu'à dégrader ledit interrupteur au point d'empêcher le courant de passer.

Outre les caractéristiques principales qui viennent d'être mentionnées dans le paragraphe précédent, le circuit électrique selon l'invention peut présenter une ou plusieurs caractéristiques supplémentaires ci-dessous, considérées individuellement ou selon toutes les combinaisons techniquement possibles :
- ledit interrupteur comporte un contact fixe et un contact mobile, ledit détecteur étant situé au voisinage desdits contact;
- ledit circuit électrique est relié au moins à un équipement disposé en série ou en parallèle avec ledit interrupteur et en ce que ladite opération de protection inclut un arrêt dudit au moins un équipement préalablement à une ouverture dudit interrupteur;
- ledit interrupteur est séparé dudit détecteur au moyen d'une paroi autorisant un transfert thermique entre ledit interrupteur et ladite paroi puis entre ladite paroi et ledit détecteur de sorte que ledit détecteur détecte une élévation de la température lorsque la température de ladite paroi dépasse une valeur seuil;
- ledit circuit électrique comprend un boîtier isolant électriquement; ledit boîtier comportant:
   • un premier compartiment comprenant ledit interrupteur;
   • un deuxième compartiment comprenant ledit détecteur ;
   • une paroi séparant ledit premier compartiment dudit deuxième compartiment;
   - ledit détecteur est au contact de ladite paroi et en vis-à-vis dudit interrupteur;
   - ladite paroi possède une épaisseur comprise entre 0,5 et 1 mm;
   - ledit circuit électrique comprend un boîtier isolant électriquement, ledit boîtier comportant ledit interrupteur et ledit détecteur;
   - ledit interrupteur est un relais bistable;
   - ledit détecteur est choisi parmi l'un des composants suivants :
      - fusible de type réarmable ;
      - fusible de type thermique ;
      - thermocouple.

D'autres caractéristiques et avantages de l'invention ressortiront clairement de la description qui en est donnée ci-dessous, à titre indicatif et nullement limitatif, de modes de réalisations faisant références aux figures annexées ci-jointes sur lesquelles :
- la figure 1 représente de façon synoptique un circuit électrique conforme à un premier mode de réalisation de l'invention ;
- la figure 2 illustre un deuxième mode de réalisation d'un circuit électrique conforme à l'invention ;
- la figure 3 représente un troisième mode de réalisation d'un circuit électrique conforme à l'invention;
- la figure 4 représente un quatrième mode de réalisation d'un circuit électrique conforme à l'invention.

Pour des raisons de clarté, les éléments apparaissant sur différentes figures ont été désignés par des références similaires. De même, seuls les éléments utiles pour la compréhension de l'invention ont été représentés, et ceci sans respect de l'échelle et de manière schématique.

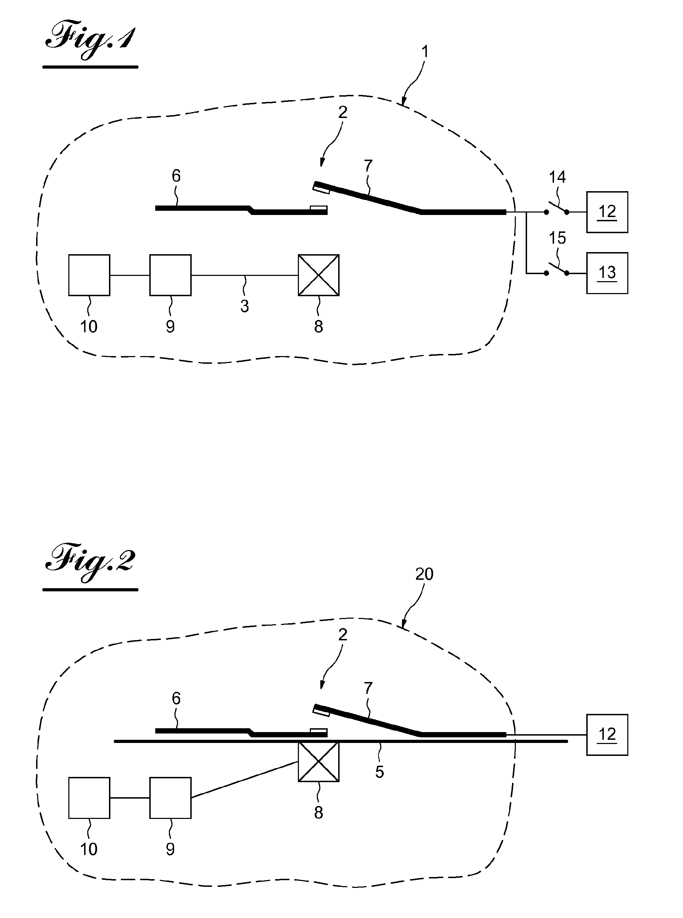

La figure 1 illustre schématiquement un circuit électrique 1 selon l'invention comportant :
- un interrupteur 2 comportant deux contacts 6 et 7; ces derniers sont représentés sur la figure 1 en position ouverte de façon à faciliter leur visualisation;
- un détecteur 8 de température réagissant aux variations de température;
- un contrôleur 9;
- un dispositif de signalisation 10.

Par exemple et tel qu'illustré sur la figure 1, le circuit électrique 1 conforme à l'invention peut être relié à deux équipements 12 et 13. On entend par équipement tout type de dispositif alimenté par un circuit électrique. On peut citer à titre d'exemple un équipement de direction assistée ou un équipement d'aide au freinage. En outre, deux interrupteurs secondaires 14 et 15 sont disposés entre l'interrupteur 2 et les équipements 12 et 13.

Il convient de noter que l'interrupteur 2 vise notamment à autoriser ou interdire le passage du courant de façon à pouvoir alimenter les équipements 12 et 13.

Le détecteur 8 est positionné, de quelque manière que ce soit, au voisinage de l'interrupteur 2 de façon à pouvoir détecter une augmentation de température que pourrait générer le courant traversant les contacts 6 et 7 de l'interrupteur 2.

Pour la suite de la description, on entend par détecteur 8 un fusible de type thermique, un fusible réarmable (par exemple un fusible du type PTC « Positive Temperature Coefficient »), un thermocouple ou tout autre type de dispositif réagissant à une augmentation ou diminution de température.

Le fonctionnement du circuit électrique 1 conforme à l'invention est à présent décrit.

En vue d'alimenter un quelconque équipement 12 ou 13, les contacts 6 et 7 de l'interrupteur 2 sont en position fermée autorisant le passage du courant électrique.

Selon l'invention, les contacts 6 et 7 de l'interrupteur 2 sont susceptibles d'être maintenus en position fermée et ce même dans l'hypothèse où un disfonctionnement électrique se produit.

Ainsi, même si une surintensité entraînant une dégradation de l'intégrité de l'interrupteur 2 se produit, les contacts 6 et 7 seront de préférence maintenus en position fermée.

Cette surintensité génère une augmentation de la température ambiante au voisinage des contacts 6 et 7. Cette augmentation est détectée par le détecteur 8 se trouvant à proximité des contacts 6 et 7.

Le détecteur 8 transmet alors un signal d'alerte 3 au contrôleur 9 de façon à ce qu'il effectue une opération de protection d'un élément du circuit électrique 1 autre que l'interrupteur 2 avant que l'interrupteur 2 ne continue à se dégrader jusqu'à empêcher le courant de passer.

L'opération de protection peut consister, par exemple, de façon individuelle ou selon toutes les combinaisons techniquement possibles :
- en une mise hors tension, au moyen des interrupteurs secondaires 14 et 15, de l'équipement 12 puis de l'équipement 13. Les équipements 12 et 13 sont mis successivement hors tension. Le fait de stopper l'alimentation de l'équipement 12 antérieurement à l'équipement 13 permet, par exemple, d'éviter une dégradation d'un des deux équipements 12 et 13. Par exemple, dans la mise en oeuvre d'une machine outil telle qu'une fraiseuse, il est préférable de stopper la rotation de la fraise antérieurement au dispositif d'application d'huile de coupe sur la fraise. En effet, dans le cas contraire, les dents de la fraise risqueraient de se détériorer prématurément.
- en une mise sous tension d'un équipement annexe de secours, non représenté, préalablement à la coupure de l'alimentation des équipements 12 et 13. A titre d'exemple, on peut citer la mise sous tension d'un équipement annexe de secours d'aide au freinage d'urgence avant la mise hors tension des équipements 12 et 13 d'aide au freinage d'urgence. Cette particularité permet par exemple à un pilote automobile de poursuivre sa course dans de bonnes conditions.
- à informer un opérateur d'une dégradation de l'interrupteur 2. Par conséquent, conformément à une telle mise en oeuvre, l'opération de protection consiste en ce que le contrôleur 9 transmette un signal au dispositif de signalisation 10. Ce dernier, informe alors l'opérateur de cette dégradation par un signal sonore et/ou visuel. L'opérateur peut ensuite effectuer les opérations requises.

Il est entendu que les équipements 12 et 13 peuvent être en série ou en parallèle.

La figure 2 illustre un circuit électrique 20 conforme à un deuxième mode de réalisation de l'invention. Le circuit 20 représenté sur la figure 2 est sensiblement similaire au circuit 1 représenté sur la figure 1. Il convient cependant de noter que le circuit 20 comporte en outre une paroi 5. Plus précisément, l'interrupteur 2 est monté sur la paroi 5. Cette dernière peut être formée par une plaque de circuit électronique ou tout autre type de support.

Selon une telle mise en oeuvre, l'interrupteur 2 est donc séparé du détecteur 8 au moyen de la paroi 5. Préférentiellement, le détecteur 8 est situé au voisinage des contacts 6 et 7.

Lorsqu'un disfonctionnement se produit, deux phénomènes peuvent se produire :
- premièrement, un pic d'intensité générant une augmentation de température de courte durée ; ou
- deuxièmement, un disfonctionnement plus important entraînant une augmentation de température sur une plus longue période.

Dans le premier cas, l'augmentation de température n'est pas transmise au détecteur 8. Cette caractéristique est assurée par la paroi 5 possédant une certaine inertie thermique temporisant la transmission de température des contacts 6 et 7 au détecteur 8.

Ainsi, le détecteur 8 ne détecte pas l'augmentation de température lorsque celle-ci est générée sur un laps de temps de courte durée. Cette caractéristique permet d'éviter de générer des opérations de protection de façon intempestive.

Pour assurer cette inertie thermique, la paroi 5 possède une température limite d'utilisation pouvant varier selon la matière et l'épaisseur.

Pour ce faire, la matière de la paroi 5 peut être, à titre illustratif et non limitatif, du :
- PBT (Polybutylène Téréphthalate);
- PA66 (Polyamide);
- PP (Polypropylène).

Il est envisageable de choisir un type différent de matériau. Particulièrement, le choix du matériau dépend de la puissance électrique que l'on souhaite distribuer via l'interrupteur 2 ainsi que de la température de l'environnement et de l'inertie thermique souhaité. De façon générale, ces matériaux ont des limites d'utilisation comprises entre 150 et 250°C.

En outre, l'épaisseur influe sur l'inertie thermique, ainsi la paroi 5 peut par exemple être comprise entre 0.5 et 1 mm.

Par ailleurs, il est entendu que le détecteur 8 peut être formé par tout type de fusible dont le résultat serait équivalent, à savoir apte à passer d'un premier état résistif à un second état résistif au-delà d'une température seuil.

Ce dernier fonctionne comme un fusible normal à usage unique. Avantageusement, il se réarme tout seul quand le défaut à disparu. Il présente une résistance faible à température ambiante et une résistance élevée à température élevée. Dès lors que sa température augmente sa résistance au passage du courant augmente aussitôt stoppant le passage du courant qui le traverse.

Ainsi un courant nominal en provenance du contrôleur 9 est stoppé au niveau du fusible réarmable. Le contrôleur 9 détecte donc une augmentation de température des contacts 6 et 7.

L'augmentation de température détectée par le détecteur 8 peut ensuite être transmise au détecteur 9 et/ou au dispositif de signalisation 10 en vue d'en informer l'opérateur. La signalisation pouvant être visuelle et/ou sonore.

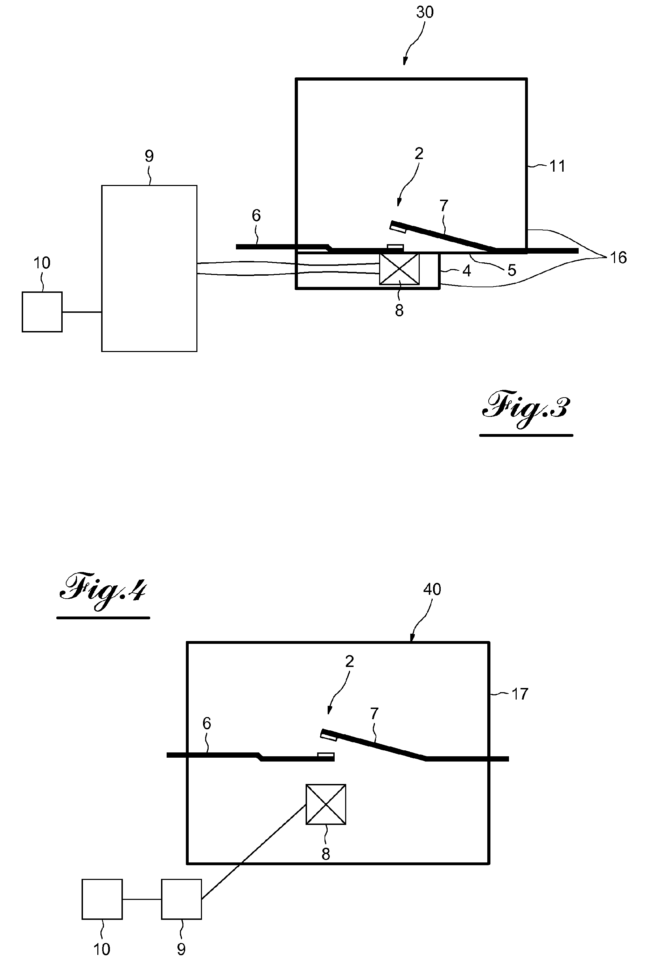

La figure 3 illustre un troisième mode de réalisation d'un circuit 30 conforme à l'invention dont l'interrupteur 2 est formé par un relais 2 bistable. Comparativement au circuit 1 représenté sur la figure 1, le circuit 30 comporte en outre un boîtier 16 formé par un premier compartiment 11 et un second compartiment 4. Ces derniers sont séparés par une paroi 5.

Le premier compartiment 3 comprend les contacts 6 et 7 du relais 2 pour assurer la mise sous tension d'un quelconque équipement électrique annexe non représenté.

Le deuxième compartiment 4 comprend le détecteur 8 apte à passer d'un premier état résistif à un second état résistif au-delà d'une température seuil. Ce dernier est situé au contact de la paroi 5 et au plus proche des grains de contact du relais 2.

Le rôle des compartiments 11 et 4 est d'isoler électriquement et thermiquement le relais 2 ainsi que le détecteur 8.

Un quatrième mode de réalisation de l'invention est illustré sur la figure 4. Le circuit 40 est sensiblement similaire à celui représenté sur la figure 1. Il convient cependant de noter qu'il comporte en outre un boîtier 17. Le détecteur 8 est situé au sein du boîtier 17 dans lequel sont positionnés les contacts 6 et 7. Contrairement au circuit électrique 30 illustré sur la figure 3, cette mise en oeuvre permet au détecteur 8 de détecter des augmentations de température de courte durée.

De façon générale, les circuits électriques 1, 20, 30, 40 selon l'invention tels qu'illustrés sur les figures 1 à 4 permettant :
- de détecter une élévation de température due à un disfonctionnement du circuit électrique ; puis
- d'effectuer une opération de protection d'un élément du circuit électrique 1, 20, 30, 40 autre que l'interrupteur 2, avant que la température de l'interrupteur 2 ne continue à augmenter jusqu'à dégrader l'interrupteur 2 au point d'empêcher le courant de passer.

On notera que le domaine d'application de l'invention concerne tout type de dispositif, de machine outil ou d'équipement électrique.

Plus particulièrement, le domaine d'application de l'invention est celui des véhicules automobiles. Le circuit électrique selon l'invention peut s'appliquer à tout type de véhicule nécessitant de l'énergie électrique en vue d'assurer une sécurité optimale pour les passagers du véhicule. De ce fait, l'invention est applicable aux autobus, voitures, camions ou tout autre type de véhicule. Le domaine d'application de l'invention peut également s'étendre à l'aviation.

## Revendications

1. Circuit électrique (1, 20, 30, 40) comprenant :
- un interrupteur (2) laissant passer le courant en position fermée et empêchant le courant de passer en position ouverte ;
- un détecteur (8) d'une élévation de température au voisinage dudit interrupteur (2), représentative d'un début de dégradation dudit interrupteur (2) en position fermée, apte à envoyer un signal d'alerte (3) représentatif dudit début de dégradation ;
- un contrôleur (9) apte, en cas de réception dudit signal d'alerte (3), à effectuer une opération de protection d'un élément dudit circuit électrique (1, 20, 30, 40) autre que ledit interrupteur (2), avant que la température dudit interrupteur (2) ne continue à augmenter jusqu'à dégrader ledit interrupteur (2) au point d'empêcher le courant de passer,
**caractérisé en ce que** ledit interrupteur (2) est séparé dudit détecteur (8) au moyen d'une paroi (5) autorisant un transfert thermique entre ledit interrupteur (2) et ladite paroi (5) puis entre ladite paroi (5) et ledit détecteur (8) de sorte que ledit détecteur (8) détecte une élévation de la température lorsque la température de ladite paroi (5) dépasse une valeur seuil.

2. Circuit électrique (1, 20, 30, 40) selon la revendication 1 **caractérisé en ce que** ledit interrupteur (2) comporte un contact fixe (6) et un contact mobile (7), ledit détecteur (8) étant situé au voisinage desdits contact (6, 7).

3. Circuit électrique (1, 20, 30, 40) selon l'une des revendications 1 à 2, **caractérisé en ce que** ledit circuit électrique (1, 20, 30, 40) est relié au moins à un équipement (12) disposé en série ou en parallèle avec ledit interrupteur (2) et **en ce que** ladite opération de protection inclut un arrêt dudit au moins un équipement (12) préalablement à une ouverture dudit interrupteur (2) .

4. Circuit électrique (1, 20, 30, 40) selon l'une au moins des revendications 1 à 3 **caractérisé en ce qu'**il comprend un boîtier (16) isolant électriquement; ledit boîtier (16) comportant:
• un premier compartiment (11) comprenant ledit interrupteur (2);
• un deuxième compartiment (4) comprenant ledit détecteur (8);
• une paroi (5) séparant ledit premier compartiment (11) dudit deuxième compartiment (4).

5. Circuit électrique (1, 20, 30, 40) selon l'une au moins des revendications 1 ou 4 **caractérisé en ce que** ledit détecteur (8) est au contact de ladite paroi (5) et en vis-à-vis dudit interrupteur (2).

6. Circuit électrique (1, 20, 30, 40) selon l'une au moins des revendications 1 ou 4,5 **caractérisé en ce que** ladite paroi (5) possède une épaisseur comprise entre 0,5 et 1 mm.

7. Circuit électrique (1, 20, 30, 40) selon l'une au moins des revendications 1 à 2 **caractérisé en ce qu'**il comprend un boîtier (17) isolant électriquement, ledit boîtier (17) comportant ledit interrupteur (2) et ledit détecteur (8).

8. Circuit électrique (1, 20, 30, 40) selon l'une au moins des revendications 1 à 7 **caractérisé en ce que** ledit interrupteur (2) est un relais bistable.

9. Circuit électrique (1, 20, 30, 40) selon l'une au moins des revendications 1 à 8 **caractérisé en ce que** ledit détecteur (8) est choisi parmi l'un des composants suivants :
- fusible de type réarmable ;
- fusible de type thermique ; thermocouple.
